# EUROPÄISCHE PATENTSCHRIFT

(11) **EP 2 036 420 B1**
(45) Veröffentlichungstag und Bekanntmachung des Hinweises auf die Patenterteilung: **09.09.2015**
(21) Anmeldenummer: 07764932.5
(22) Anmeldetag: 29.06.2007
(51) Int. Cl.: G01D 21/00, G05B 19/02

(54) **SCHNITTSTELLENVORRICHTUNG**
INTERFACE DEVICE
SYSTÈME D'INTERFACE

(30) Priorität: 03.07.2006 DE 102006030616
(43) Veröffentlichungstag der Anmeldung: 18.03.2009
(73) Patentinhaber: Valeo Schalter und Sensoren GmbH, 74321 Bietigheim-Bissingen (DE)
(72) Erfinder: LILL, Anton, 74348 Lauffen (DE); BAUER, Jürgen, 71732 Tamm (DE)
(86) Internationale Anmeldenummer: PCT/EP2007/005757
(87) Internationale Veröffentlichungsnummer: WO 2008/003429

(56) Entgegenhaltungen:
- EP-A- 1 462 681
- EP-A2- 1 231 481
- EP-A2- 1 278 076
- EP-A2- 1 493 631
- WO-A-00/28285
- WO-A-00/55646
- WO-A-2007/115055
- WO-A1-99/32856
- GB-A- 2 251 948

## Beschreibung

Die vorliegende Erfindung betrifft ein elektronisches Sensorsystem eines ultraschallbasieren Einparkhilfesystems für ein Kraftfahrzeug, das eine Mehrzahl von Ultraschallsensoren sowie eine Recheneinheit zur Ansteuerung der Ultraschallsensoren und/oder Auswertung mittels der Ultraschallsensoren erhaltener Sensordaten aufweist, und mit einer Schnittstellenvorrichtung mittels der die Ultraschallsensoren mit der Recheneinheit verbindbar sind.

Bekannte Schnittstellenvorrichtungen dieser Art weisen häufig eine Vielzahl von diskreten elektronischen Bauteilen wie beispielsweise Widerständen, Kondensatoren, Dioden, Transistoren, Operationsverstärker sowie verschiedene integrierte Schaltkreise, beispielsweise Pegelwandler-ICs und sonstige Schaltungskomponenten auf und sind dementsprechend aufwändig in der Fertigung.

Je nach Art der verwendeten Sensoren bzw. in Abhängigkeit des vorgesehenen Zielsystems, in das das elektronische Sensorsystem beziehungsweise die zugehörige Schnittstellenvorrichtung zu integrieren ist, existieren häufig verschiedene Varianten hinsichtlich der Verbindung der Recheneinheit mit den Sensoren, die möglichst alle durch dieselbe Schnittstellenvorrichtung abzudecken sind.

Ein weiterer Vorschlag aus dem Stand der Technik sieht vor, alle erforderlichen Bauteile und Komponenten bzw. eine entsprechende Funktionalität, die zur Erfüllung der Maximalanforderungen z.B. hinsichtlich der Zahl der zu steuernden Sensoren nötig sind, in eine Schnittstellenvorrichtung zu integrieren. Sehr nachteilig an diesem Vorschlag ist die im Mittel nur unzureichende Ausnutzung der vorgesehenen Ressourcen, da in allen Anwendungsfällen, bei denen geringere als die Maximalanforderungen zu erfüllen sind, ein Großteil der in die herkömmliche Schnittstellenvorrichtung integrierten Funktionalität nicht genutzt wird. Die erhöhten Fertigungskosten für eine derartige Schnittstellenvorrichtung sind daher in den meisten Anwendungsfällen, bei denen beispielsweise nur wenige Sensoren anzusteuern sind, nicht gerechtfertigt.

EP 1 493 631 A2 betrifft ein Fahrerassistenzverfahren und eine Fahrerassistenzvorrichtung für ein Kraftfahrzeug. Um auch bei niedrigen Geschwindigkeiten einen Konflikt zu vermeiden zwischen einer Einparkhilfe-Betriebsart, die bei Unterschreiten einer Mindestgeschwindigkeit aktivierbar ist und in der Abstände zu anderen Objekten ermittelt und Steuersignale für mindestens einen Aktuator des Fahrzeugs und/oder Anzeigesignale ausgegeben werden, und einer bis zu einem Fahrzeugstillstand durchführbaren adaptiven Fahrgeschwindigkeitsregelungs-Betriebsart, in der Abstände und Relativgeschwindigkeiten zu anderen fahrenden Fahrzeugen ermittelt und Steuersignale an Aktuatoren des Fahrzeuges ausgegeben werden, ist vorgesehen, dass ein einen Zustand der adaptiven Fahrgeschwindigkeitsregelungs- Betriebsart anzeigendes Zustandssignal für die Einparkhilfe-Betriebsart verwendet wird.

EP 1 278 076 A2 betrifft ein Abstandmesssystem, insbesondere für ein Fahrzeug, umfassend wenigstens zwei Ultraschallsensoren und eine mit den Ultraschallsensoren verbundene Steuereinheit. Die Erfindung kennzeichnet sich dadurch, dass wenigstens ein Ultraschallsensor ober- und/oder unterhalb eines anderen Ultraschallsensors angeordnet ist, wobei die Steuereinheit aus den unterschiedlichen Laufzeiten der reflektierten Ultraschallsignalen der über- und/oder untereinander angeordneten Ultraschallsensoren die absolute oder relative Höhe eines sich in dem Erfassungsbereich des Abstandmesssystems befindenden Gegenstandes bestimmt.

EP 1 231 481 A2 betrifft ein Verfahren zum Betrieb eines Ultraschall-Multisensor-Arrays insbesondere einer Einparkhilfe eines Kraftfahrzeugs. Das Multisensor-Array weist mindestens zwei entlang dem Umfang des Kraftfahrzeugs angeordneten Sendeeinheiten zum Aussenden von Ultraschallpulsen in einen Überwachungsbereich und mindestens eine Empfangseinheit zum Empfangen von an einem Objekt in dem Überwachungsbereich reflektierten Ultraschallpulsen. Mehrere Sendeeinheiten können parallel betrieben werden und zeitgleich zueinander kodierte Ultraschallpulse aussenden. Um auf eine möglichst einfache Weise eine effektive Erhöhung der Empfindlichkeit und der Reichweite der Detektion von Objekten in dem Überwachungsbereich zu erzielen, wird vorgeschlagen, dass zur Kodierung Trägersignale der Ultraschallpulse für die einzelnen zeitgleich betriebenen Sendeeinheiten zumindest während der Pulsdauer unterschiedlich frequenzmoduliert werden und dass die empfangenen kodierten Ultraschallpulse von der mindestens einen Empfangseinheit anhand der Kodierung den einzelnen zeitgleich betriebenen Sendeeinheiten zuordnet werden.

Demgemäß ist es Aufgabe der vorliegenden Erfindung, einelektronisches Sensorsystem der eingangs genannten Art derart zu verbessern, dass eine gesteigerte Flexibilität hinsichtlich von Ausgestaltungsvarianten beziehungsweise der Konfigurierbarkeit gegeben ist.

Diese Aufgabe wird erfindungsgemäß dadurch gelöst, dass mindestens zwei Sensorschnittstelleneinheiten zur Verbindung mit den Ultraschallsensoren gleichzeitig durch die Schnittstellenvorrichtung aufnehmbar sind, wobei jede Sensorschnittstelleneinheit aus einer Mehrzahl von Sensorschnittstelleneinheiten wählbar ist, die sich mindestens durch eine unterschiedliche Anzahl von Sensorkanälen unterscheiden. Jede Sensorschnittstelleneinheit weist sechs oder acht Sensorkanäle auf.

Das heißt, erfindungsgemäß können verschiedene Sensorschnittstelleneinheiten vorgesehen sein, die je nach Anwendungsfall in die erfindungsgemäße Schnittstellenvorrichtung integrierbar sind. Besonders vorteilhaft sind gleichzeitig mindestens zwei Sensorschnittstelleneinheiten durch die erfindungsgemäße Schnittstellenvorrichtung aufnehmbar. Je nach Anwendungsfall ist damit vorteilhaft die Möglichkeit gegeben, gleichzeitig zwei Sensorschnittstelleneinheiten in der Schnittstellenvorrichtung vorzusehen, beispielsweise für den Betrieb vieler Sensoren. Andererseits ist es erfindungsgemäß auch möglich, die Schnittstellenvorrichtung nur mit einer Sensorschnittstelleneinheit zu betreiben, was die Wirtschaftlichkeit des Gesamtsystems insbesondere in solchen Anwendungsfällen steigert, in denen z.B. nur wenige Sensoren anzusteuern sind.

Eine Ausstattung der erfindungsgemäßen Schnittstellenvorrichtung mit mehr als zwei Sensorschnittstelleneinheiten ist ebenfalls denkbar.

Neben der variablen Anzahl von Sensorschnittstelleneinheiten, mit der primär die Maximalanzahl von durch die Recheneinheit anzusteuernder Sensoren festlegbar ist, bietet sich durch die erfindungsgemäße Bestückbarkeit der Schnittstellenvorrichtung mit mehreren Sensorschnittstelleneinheiten gleichzeitig ein weiterer Freiheitsgrad, indem beispielsweise Sensorschnittstelleneinheiten unterschiedlichen Typs gleichzeitig in der Schnittstellenvorrichtung verwendbar sind.

Beispielsweise kann eine Sensorschnittstelleneinheit eines ersten Typs sechs Sensorkanäle aufweisen, d.h., sie ist dazu geeignet, insgesamt sechs Sensoren bzw. Sensormodule oder dergleichen mit der Recheneinheit eines entsprechenden Sensorsystems zu verbinden. Eine Sensorschnittstelleneinheit eines zweiten Typs weist demgegenüber z.B. acht Sensorkanäle auf, d.h., sie ist dazu geeignet, insgesamt acht Sensoren mit der Recheneinheit eines entsprechenden Sensorsystems zu verbinden. Durch eine entsprechende Kombination dieser Sensorschnittstelleneinheiten kann die erfindungsgemäße Schnittstellenvorrichtung vorteilhaft vielseitig konfiguriert werden. Die Realisierung einer anderen Anzahl von Sensorkanälen durch eine Sensorschnittstelleneinheit ist ebenso denkbar.

Beispielsweise sind durch den alleinigen Einsatz einer Sensorschnittstelleneinheit des ersten Typs maximal sechs Sensoren ansteuerbar und durch die Verwendung zweier Sensorschnittstelleneinheiten des ersten Typs dementsprechend maximal zwölf Sensoren. Eine Kombination von Sensorschnittstelleneinheiten des ersten und zweiten Typs ermöglicht analog die Ansteuerung von maximal vierzehn Sensoren.

Neben einer Kostenoptimierung bei der Fertigung der erfindungsgemäßen Schnittstellenvorrichtung, die sich durch den Einsatz der Sensorschnittstelleneinheiten ergibt, besteht durch die Zusammenfassung der benötigten Bauelemente jeweils in einer Sensorschnittstelleneinheit ein verringerter Bestückungsaufwand, und gleichzeitig wird auch die Baugröße der gesamten Anordnung verkleinert.

Obwohl es prinzipiell denkbar ist, die erfindungsgemäßen Sensorschnittstelleneinheiten als separate Module mit diskreten Bauelementen oder teilweise integrierten Bauelementen auszubilden, die als einzelne Komponente in die Sensorvorrichtung integrierbar sind, ist bei einer ganz besonders vorteilhaften Ausführungsform der vorliegenden Erfindung mindestens eine Sensorschnittstelleneinheit als integrierte Schaltung, vorzugsweise als anwendungsspezifischer integrierter Schaltkreis (ASIC) ausgebildet. Dadurch ergibt sich eine weitere Verringerung der Baugröße der gesamten Anordnung sowie eine Steigerung der Fertigungsqualität durch eine Verringerung der Bauteilanzahl und darüberhinaus auch eine Vereinfachung der gesamten Schaltungsanordnung.

Weiterhin ist durch die Integration der bei herkömmlichen Vorrichtungen diskret vorhandenen Einzelbauteile in die erfindungsgemäßen Sensorschnittstelleneinheiten eine Verbesserung der erfindungsgemäßen Schnittstellenvorrichtung hinsichtlich der elektromagnetischen Verträglichkeit insbesondere auch durch die Möglichkeit einer zusätzlichen Integration hierfür erforderlicher Komponenten kostengünstiger zu erreichen.

Bei einer weiteren sehr vorteilhaften Ausführungsform der erfindungsgemäßen Schnittstellenvorrichtung weist die Schnittstellenvorrichtung, insbesondere eine elektronische Leiterplatte oder ein Substrat der Schnittstellenvorrichtung, mindestens zwei Bestückungsplätze zur Aufnahme der Sensorschnittstelleneinheiten auf. Durch die erfindungsgemäße Kombinierbarkeit der Schnittstellenvorrichtung mit einer oder mehreren Sensorschnittstelleneinheiten kann sich hierbei auch der Fall ergeben, dass einer der mindestens zwei Bestückungsplätze unbenutzt bleibt. Dieser vermeintliche Nachteil wird allerdings durch die vielseitige Konfigurierbarkeit der Erfindung, die sich durch den Einsatz mindestens zweier Sensorschnittstelleneinheiten ergibt, kompensiert. In weiteren Anwendungsfällen, bei denen beide Bestückungsplätze durch entsprechende Sensorschnittstelleneinheiten genutzt werden, ist hingegen eine optimale Flächennutzung der elektronischen Leiterplatte beziehungsweise des Substrats gegeben.

Je nach Ausbildung der Sensorschnittstelleneinheiten kann es sich bei den Bestückungsplätzen entweder direkt um entsprechende Pads handelnd, auf denen die Sensorschnittstelleneinheiten z.B. auflötbar sind, oder auch um IC-Sockel oder sonstige Steckverbinder für den Fall, dass die Sensorschnittstelleneinheiten z.B. auf einer separaten Platine oder einem separaten Substrat vorgesehen sind.

Einer weiteren sehr vorteilhaften Ausführungsform der vorliegenden Erfindung zufolge sind die verschiedenen Sensorschnittstelleneinheiten pinkompatibel ausgebildet, so dass Sensorschnittstelleneinheiten unterschiedlichen Typs, die sich beispielsweise durch die Anzahl von Sensorkanälen unterscheiden, wahlweise sowohl auf einem ersten als auch auf einem zweiten oder einem weiteren Bestückungsplatz der Schnittstellenvorrichtung angeordnet werden können. Um ein möglichst einfaches und an alle Kombinationen von Sensorschnittstelleneinheiten angepasstes Layout der elektrischen Leitungen auf der Schnittstellenvorrichtung zu erzielen, können bei den einzelnen Konfigurationen ggf. insbesondere Null-Ohm-Brücken oder sonstige Verbindungselemente vorgesehen sein, die je nach Bedarf bestückt werden oder nicht.

Die Sensorschnittstelleneinheit weist 6 oder 8 Sensorkanäle auf. Dabei ist über jeden Sensorkanal - wie bereits beschrieben - ein Sensor beziehungsweise Sensormodul steuerbar. Die erfindungsgemäße Schnittstellenvorrichtung wird in dem elektronischen Sensorsystem, das Ultraschallsensoren aufweist, dazu verwendet, die Ultraschallsensoren beziehungsweise diese Sensoren enthaltende Sensormodule mit der Recheneinheit des elektronischen Sensorsystems zu verbinden. Im Einzelnen erfolgt eine derartige Verbindung über die erfindungsgemäßen Sensorschnittstelleneinheiten, die hierzu jeweils mit dem betreffenden Sensor beziehungsweise Sensormodul und der Recheneinheit verbindbar sind.

Insbesondere im Kraftfahrzeugbereich besteht eine große Vielzahl von Varianten bei auf Ultraschallsensoren basierenden elektronischen Sensorsystemen, die sich untereinander primär durch die Anzahl der benötigten Sensorkanäle unterscheiden. Hierbei ist durch die erfindungsgemäße Schnittstellenvorrichtung vorteilhaft die Möglichkeit gegeben, gezielt solche Sensorschnittstelleneinheiten mit der erfindungsgemäßen Schnittstellenvorrichtung zu kombinieren, die beispielsweise in Kombination miteinander eine Anzahl von Sensorkanälen bereitstellen, die größer bzw. gleich der Anzahl von anzusteuernden Sensoren ist. Gleichzeitig kann für andere Varianten von elektronischen Sensorsystemen, die beispielsweise einen einfacheren Aufbau und daher auch eine geringere Anzahl von Sensorkanälen erfordern, wie bereits beschrieben, nur eine einzige Sensorschnittstelleneinheit mit einer entsprechend geringen Anzahl von Sensorkanälen vorgesehen sein.

Eine andere vorteilhafte Weiterbildung der vorliegenden Erfindung sieht vor, dass die Sensorschnittstelleneinheit mindestens einen Aktorkanal aufweist. Durch den Aktorkanal ist es der Recheneinheit beispielsweise ermöglicht, über die erfindungsgemäße Schnittstellenvorrichtung zum Beispiel einen Signalgeber, insbesondere einen akustischen Signalgeber im Falle von Ultraschall-Einparkhilfesystemen oder dergleichen anzusteuern. Ein hierzu ggf. erforderlicher Leistungstreiber kann auch in die entsprechende Sensorschnittstelleneinheit integriert sein, wird bevorzugt aber separat vorgesehen.

Eine andere sehr vorteilhafte Ausgestaltung der vorliegenden Erfindung ist dadurch gekennzeichnet, dass die Sensorschnittstelleneinheit mindestens einen Pegelwandler aufweist, insbesondere zur Umwandlung von Signalpegeln der Sensoren und der Recheneinheit. Beispielsweise arbeitet die Recheneinheit des Sensorsystems mit einer Betriebsspannung von 5 Volt, während die Sensoren des Sensorsystems beziehungsweise die Sensoren aufweisende Sensormodule eine Betriebsspannung von 12 Volt benötigen und dementsprechend auch Signale mit einem Spannungspegel von 12 Volt aufnehmen beziehungsweise abgeben. In derartigen Fällen kann die entsprechende Pegelwandlung direkt durch die erfindungsgemäße Schnittstellenvorrichtung beziehungsweise deren Sensorschnittstelleneinheit erfolgen.

Es ist ferner vorteilhaft möglich, dass Sensorschnittstelleneinheiten auch unterschiedliche Pegelwandler oder dergleichen aufweisen, beispielsweise um verschiedene Sensormodule mit unterschiedlichen Betriebsspannungspegeln zu bedienen.

Besonders vorteilhaft ist die erfindungsgemäße Schnittstellenvorrichtung, vorzugsweise zusammen mit der Recheneinheit des Sensorsystems, in ein das Sensorsystem steuerndes Steuergerät integrierbar.

Als eine weitere Lösung der Aufgabe der vorliegenden Erfindung ist ein elektronisches Sensorsystem gemäß Patentanspruch 11 angegeben.

Die Sensoren des erfindungsgemäßen elektronischen Sensorsystems können vorteilhaft beispielsweise als Ultraschallsensoren und/oder als Radarsensoren und/oder als optische Sensoren ausgebildet sein.

Weitere Merkmale, Anwendungsmöglichkeiten und Vorteile der Erfindung ergeben sich aus der nachfolgenden Beschreibung von Ausführungsbeispielen der Erfindung, die in der einzigen Figur der Zeichnung dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung beziehungsweise Darstellung in der Beschreibung beziehungsweise in der Zeichnung.

Die einzige Figur der Zeichnung zeigt ein schematisches Blockschaltbild einer Ausführungsform der erfindungsgemäßen Schnittstellenvorrichtung.

Wie aus der Figur ersichtlich, weist das elektronische Sensorsystem 200 eine Recheneinheit 230 auf sowie eine Vielzahl von vorliegend in zwei Gruppen 210, 220 angeordneten Ultraschallsensoren, die über die erfindungsgemäße Schnittstellenvorrichtung 100 mit der Recheneinheit 230 verbunden und damit durch diese ansteuerbar sind.

Die erfindungsgemäße Schnittstellenvorrichtung 100 weist dem vorliegenden Beispiel zufolge zwei Sensorschnittstelleneinheiten 110, 120 auf, wobei jeder Sensorschnittstelleneinheit 110, 120 eine Gruppe 210, 220 der Ultraschallsensoren zugewiesen ist. D.h., die erste Sensorschnittstelleneinheit 110 dient zum Betrieb der ersten Gruppe 210, und die zweite Sensorschnittstelleneinheit 120 dient zum Betrieb der zweiten Gruppe 220 von Ultraschallsensoren.

Die Sensorschnittstelleneinheiten 110, 120 dienen insbesondere zur Übertragung der von der Recheneinheit 230 ausgehenden Ansteuersignale für die Sensoren 210, 220 sowie für eine Übertragung von durch die Sensoren 210, 220 erhaltenen Sensordaten an die Recheneinheit 230. Hierzu realisieren sie eine entsprechende, vorzugsweise bidirektionale elektrische Verbindung.

Bei der Recheneinheit 230 kann es sich beispielsweise um einen Mikrocontroller oder auch um einen digitalen Signalprozessor (DSP) handeln.

Um die unterschiedlichen Spannungspegel zwischen der Recheneinheit 230 und den Sensoren 210, 220 beziehungsweise die Sensoren 210, 220 enthaltenen Sensormodulen auszugleichen, weisen die erfindungsgemäßen Sensorschnittstelleneinheiten 110, 120 nicht in der Figur abgebildete Pegelwandler von z.B. 5 Volt auf 12 Volt und umgekehrt auf, die eine entsprechende Pegelwandlung in beiden Kommunikationsrichtungen bewirken.

Die in die erfindungsgemäße Schnittstellenvorrichtung 100 integrierten Sensorschnittstelleneinheiten 110, 120 sind in Abhängigkeit des entsprechenden Anwendungsfalls vorteilhaft so ausgebildet, dass sie eine der Zahl der anzusteuernden Sensoren 210, 220 entsprechende Anzahl von Sensorkanälen aufweisen.

Zusätzlich zu den Sensorkanälen können die erfindungsgemäßen Sensorschnittstelleneinheiten 110, 120 auch Aktorkanäle aufweisen, beispielsweise um akustische oder optische Signalgeber anzusteuern. Die Aktorkanäle arbeiten üblicherweise nur unidirektional, d.h. von der Recheneinheit 230 über die Schnittstelleneinheit 110, 120 zu dem entsprechenden Aktor. Vorteilhaft ist in diesem Fall auch die Integration entsprechender Leistungstreiber direkt in die jeweilige Sensorschnittstelleneinheit 110, 120, so dass unter Verwendung der erfindungsgemäßen Schnittstellenvorrichtung 100 auch z.B. ein Lautsprecher oder eine Signallampe direkt durch die Recheneinheit 230 ansteuerbar sind. Ein separater Leistungstreiber wird ebenfalls bevorzugt eingesetzt.

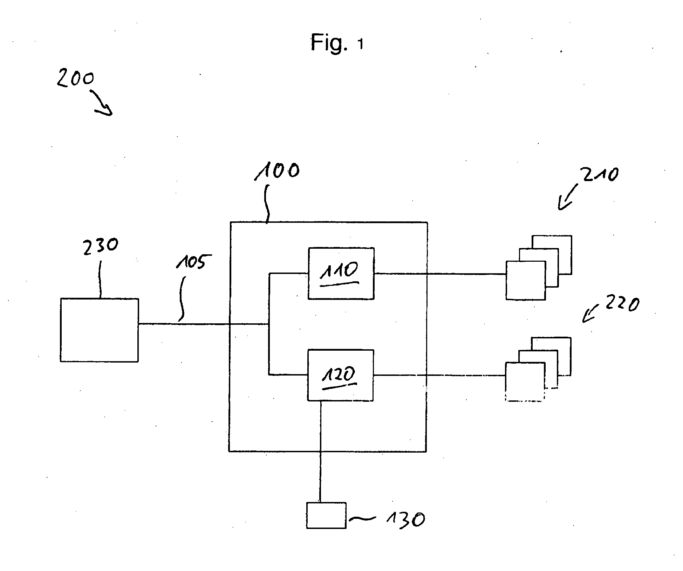

Beispielsweise ist aus Figur 1 ersichtlich, dass die erste Sensorschnittstelleneinheit 110 keinen Aktorkanal aufweist, während die zweite Sensorschnittstelleneinheit 120 einen Aktorkanal aufweist, der zur Ansteuerung des akustischen Signalgebers 130 dient.

Bei anderen Anwendungsfällen, bei denen entsprechend gegebenenfalls mehrere Signalgeber anzusteuern sind, kann die erfindungsgemäße Schnittstellenvorrichtung 100 mit anderen Sensorschnittstelleneinheiten 110, 120 kombiniert werden, die eine den Anforderungen entsprechende Anzahl von Aktorkanälen aufweisen. Dabei ist es möglich, dass die Aktorkanäle sowohl in einer der beiden Sensorschnittstelleneinheiten 110, 120 allein angeordnet sind oder auch auf beide Sensorschnittstelleneinheiten 110, 120 verteilt sind.

Zur Ausbildung von ultraschallbasierten Einparkhilfesystemen für Kraftfahrzeuge werden solche Sensorschnittstelleneinheiten 110, 120 verwendet, die entweder sechs oder acht Sensorkanäle und keinen oder einen Aktorkanal aufweisen. Damit lassen sich vorteilhaft alle bekannten Kombinationen von Sensorkonfigurationen beziehungsweise entsprechenden akustischen oder optischen Signalgebern realisieren, die im Kraftfahrzeugbereich gegenwärtig eingesetzt werden.

Die erfindungsgemäße Schnittstellenvorrichtung 100 ist nicht auf den Einsatz in elektronischen Sensorsystemen 200 begrenzt, die Ultraschallsensoren verwenden. Vielmehr kann die erfindungsgemäße Schnittstellenvorrichtung 100 auch zur Ansteuerung von Radarsensoren, optischen Sensoren oder anderen Sensoren verwendet werden.

Neben einer unmittelbaren Zuordnung der einzelnen Sensoren 210, 220 zu dedizierten Sensorkanälen der entsprechenden Sensorschnittstelleneinheit 110, 120 können vorteilhaft in den entsprechenden Sensorschnittstelleneinheiten 110, 120 auch Multiplexer (nicht gezeigt) vorgesehen sein, die eine Mehrfachnutzung von zwischen der Recheneinheit 230 und der Schnittstellenvorrichtung 100 ausgebildeten Datenverbindungen 105 dahingehend ermöglichen, dass zeitweise eine erste Gruppe von Sensoren über die erfindungsgemäße Schnittstellenvorrichtung 100 und die Datenverbindungen 105 mit der Recheneinheit 230 verbunden ist, und zeitweise eine weitere Gruppe von Sensoren über dieselben Datenverbindungen 105 zwischen der Recheneinheit 230 und der Schnittstellenvorrichtung 100 mit der Recheneinheit 230 verbunden ist.

Wie bereits beschrieben kann die erfindungsgemäße Schnittstellenvorrichtung 100 auch nur mit einer Sensorschnittstelleneinheit 110 versehen sein, sofern diese hinreichend viele Sensor- bzw. Aktorkanäle zur Ansteuerung aller erforderlicher Sensoren 210 bzw. Aktoren 130 aufweist. Da die Sensorschnittstelleneinheiten 110, 120 bevorzugt zumindest weitestgehend pinkompatibel ausgebildet sind, kann die einzelne Sensorschnittstelleneinheit 110 in dem vorstehend genannten Fall wahlweise auf einem ersten oder einem zweiten Bestückungsplatz der Sensorvorrichtung 100 angeordnet sein. In jedem Fall weist die erfindungsgemäße Sensorvorrichtung 100 mindestens zwei Bestückungsplätze auf, um die vorteilhafte Kombinierbarkeit von Sensorschnittstelleneinheiten 110, 120 zu ermöglichen.

Ganz besonders vorteilhaft sind die erfindungsgemäßen Sensorschnittstelleneinheiten 110, 120 als ASIC ausgebildet, wobei aufgrund der beliebigen Kombinierbarkeit der Sensorschnittstelleneinheiten 110, 120 in der Sensorvorrichtung 100 nur eine geringe Anzahl verschiedener Varianten von ASICs erforderlich ist, um für alle denkbaren Anwendungsfälle eine hinreichende Anzahl von Sensor- bzw. Aktorkanälen bereitzustellen.

Die erfindungsgemäße Schnittstellenvorrichtung 100 ist, vorzugsweise zusammen mit der Recheneinheit 230, in ein das Sensorsystem 200 steuerndes Steuergerät integrierbar.

Insgesamt ist durch die erfindungsgemäße Schnittstellenvorrichtung 100 eine vorteilhafte, hochgradig konfigurierbare Verbindung der Recheneinheit 230 mit den Sensoren 210, 220 gegeben, die u.a. integrierte Pegelwandler, Leistungstreiber zur Ansteuerung von Aktoren aufweisen kann. Durch die Auswahlmöglichkeit hinsichtlich der Bestückung der Schnittstellenvorrichtung 100 mit Sensorschnittstelleneinheiten 110, 120 unterschiedlichen Typs, die u.a. durch die mindestens zwei Bestückungsplätze auf der Schnittstellenvorrichtung 100 gegeben ist, kann die Schnittstellenvorrichtung 100 vorteilhaft so konfiguriert werden, dass die vorhandenen Ressourcen wie z.B. Sensorkanäle ihrer Anzahl und Ausbildung nach möglichst gut an einen gegebenen Anwendungsfall angepasst sind, so dass ein effizienter Einsatz von Hardware gegeben ist und insbesondere der Anteil an vorhandenen, jedoch nicht genutzten Funktionalitäten minimiert wird.

Durch den Einsatz von zwei verschiedenen ASIC-Typen für die Sensorschnittstelleneinheiten 110, 120 ist bereits eine umfassende Konfigurierbarkeit der erfindungsgemäßen Schnittstellenvorrichtung 100 und damit auch des erfindungsgemäßen Sensorsystems 200 gegeben.

## Patentansprüche

1. Elektronisches Sensorsystem (200) eines ultraschallbasierten Einparkhilfesystems für ein Kraftfahrzeug, das eine Mehrzahl von Ultraschallsensoren (210, 220) sowie eine Recheneinheit (230) zur Ansteuerung der Ultraschallsensoren (210, 220) und/oder Auswertung mittels der Ultraschallsensoren (210, 220) erhaltener Sensordaten aufweist, und mit einer Schnittstellenvorrichtung (100) mittels der die Ultraschallsensoren (210, 220) mit der Recheneinheit (230) verbindbar sind, wobei mindestens zwei Sensorschnittstelleneinheiten (110, 120) zur Verbindung mit den Ultraschallsensoren (210, 220) gleichzeitig durch die Schnittstellenvorrichtung (100) aufnehmbar sind, wobei jede Sensorschnittstelleneinheit (110, 120) aus einer Mehrzahl von Sensorschnittstelleneinheiten wählbar ist, die sich mindestens durch eine unterschiedliche Anzahl von Sensorkanälen unterscheiden, wobei jede Sensorschnittstelleneinheit (110, 120) sechs oder acht Sensorkanäle aufweist.

2. Sensorsystem (200) nach Anspruch 1, wobei mindestens eine Sensorschnittstelleneinheit (110, 120) als integrierte Schaltung, vorzugsweise als anwendungsspezifischer integrierter Schaltkreis, ASIC, ausgebildet ist.

3. Sensorsystem (200) nach Anspruch 1 oder 2, wobei die Schnittstellenvorrichtung (100), insbesondere eine elektronische Leiterplatte oder ein Substrat der Schnittstellenvornchtung (100), mindestens zwei Bestückungsplätze zur Aufnahme der Sensorschnittstelleneinheiten (110, 120) aufweist.

4. Sensorsystem (200) nach einem der vorstehenden Ansprüche, mit mindestens einer Sensorschnittstelleneinheit (110, 120).

5. Sensorsystem (200) nach einem der vorhergehenden Ansprüche, wobei die Sensorschnittstelleneinheit (110, 120) mindestens einen Aktorkanal aufweist.

6. Sensorsystem (200) nach einem der vorstehenden Ansprüche, wobei die verschiedenen Sensorschnittstelleneinheiten (110, 120) pinkompatibel sind.

7. Sensorsystem (200) nach einem der vorstehenden Ansprüche, wobei die Schnittstellenvorrichtung (100), vorzugsweise zusammen mit der Recheneinheit (230), in ein das Sensorsystem (200) steuerndes Steuergerät integrierbar ist.

8. Sensorsystem (200) nach einem der vorstehenden Ansprüche, wobei die Sensorschnittstelleneinheit (110, 120) mindestens einen Leistungstreiber, insbesondere zur Ansteuerung eines Aktorkanals, aufweist.

9. Sensorsystem (200) nach einem der vorstehenden Ansprüche, wobei die Sensorschnittstelleneinheit (110, 120) mindestens einen Pegelwandler aufweist, insbesondere zur Umwandlung von Signalpegeln der Sensoren (210, 220) und der Recheneinheit (230).

## Claims

1. Electronic sensor system (200) of an ultrasound-based parking assistance system for a motor vehicle, comprising a plurality of ultrasound sensors (210, 220) and a processing unit (230) for controlling the ultrasound sensors (210, 220) and/or analysing sensor data obtained by the ultrasound sensors (210, 220), and having an interface device (100) by means of which the ultrasound sensors (210, 220) can be connected to the processing unit (230), where the interface device (100) is able to accommodate simultaneously at least two sensor interface units (110, 120) for connecting to the ultrasound sensors (210, 220), where each sensor interface unit (110, 120) can be selected from a plurality of sensor interface units, which differ at least by a different number of sensor channels, where each sensor interface unit (110, 120) comprises six or eight sensor channels.

2. Sensor system (200) according to Claim 1, where at least one sensor interface unit (110, 120) is implemented as an integrated circuit, preferably as an application-specific integrated circuit, ASIC.

3. Sensor system (200) according to Claim 1 or 2, where the interface device (100), in particular an electronic printed circuit board or a substrate of the interface device (100), comprises at least two mounting positions for accommodating the sensor interface units (110, 120) .

4. Sensor system (200) according to any of the previous claims, having at least one sensor interface unit (110, 120).

5. Sensor system (200) according to any of the previous claims, where the sensor interface unit (110, 120) comprises at least one actuator channel.

6. Sensor system (200) according to any of the previous claims, where the different sensor interface units (110, 120) are pin-compatible.

7. Sensor system (200) according to any of the previous claims, where the interface device (100) can be integrated, preferably together with the processing unit (230), in a control module controlling the sensor system (200).

8. Sensor system (200) according to any of the previous claims, where the sensor interface unit (110, 120) comprises at least one power driver, in particular for controlling an actuator channel.

9. Sensor system (200) according to any of the previous claims, where the sensor interface unit (110, 120) comprises at least one level converter, in particular for converting signal levels of the sensors (210, 220) and the processing unit (230).

## Revendications

1. Système de capteur électronique (200) d'un système d'assistance au stationnement à ultrasons destiné à un véhicule automobile, qui comprend une pluralité de capteurs à ultrasons (210, 220) ainsi qu'une unité de calcul (230) destiné à attaquer les capteurs à ultrasons (210, 220) et/ou à évaluer des données de capteurs obtenues au moyen des capteurs à ultrasons (210, 220), et comportant un dispositif d'interface (100) par l'intermédiaire duquel les capteurs à ultrasons (210, 220) peuvent être connectés à l'unité de calcul (230), dans lequel au moins deux unités d'interface de capteurs (110, 120) peuvent être simultanément prises en charge par l'intermédiaire du dispositif d'interface (100) pour la connexion aux capteurs à ultrasons (210, 220), dans lequel chaque unité d'interface de capteur (110, 120) peut être sélectionnée parmi une pluralité d'unités d'interface de capteurs qui se différencient par au moins un nombre différent de canaux de capteurs, dans lequel chaque unité d'interface de capteur (110, 120) comprend six ou huit canaux de capteurs.

2. Système de capteur (200) selon la revendication 1, dans lequel au moins une unité d'interface de capteur (110, 120) est réalisée sous la forme d'un circuit intégré, de préférence sous la forme d'un circuit intégré à application spécifique, ASIC.

3. Système de capteur (200) selon la revendication 1 ou 2, dans lequel le dispositif d'interface (100), notamment une carte de circuit électronique ou un substrat du dispositif d'interface (100), comprend au moins deux emplacements de montage (110, 120).

4. Système de capteur (200) selon l'une quelconque des revendications précédentes, comportant au moins une unité d'interface de capteur (110, 120).

5. Système de capteur (200) selon l'une quelconque des revendications précédentes, dans lequel l'unité d'interface de capteur (110, 120) comprend au moins un canal d'actionneur.

6. Système de capteur (200) selon l'une quelconque des revendications précédentes, dans lequel les différentes unités d'interface (110, 120) ont des brochages compatibles.

7. Système de capteur (200) selon l'une quelconque des revendications précédentes, dans lequel le dispositif d'interface (100) est de préférence intégrable en association avec l'unité de calcul (230) dans un appareil de commande commandant le système de capteurs (200).

8. Système de capteur (200) selon l'une quelconque des revendications précédentes, dans lequel l'unité d'interface de capteur (110, 120) comprend au moins un circuit d'attaque de puissance, notamment destiné à commander un canal d'actionneur.

9. Système de capteur (200) selon l'une quelconque des revendications précédentes, dans lequel l'unité d'interface de capteur (110, 120) comprend au moins un convertisseur de niveau, notamment destiné à convertir des niveaux de signaux des capteurs (210, 220) et de l'unité de calcul (230).
